# EUROPÄISCHE PATENTSCHRIFT

(11) **EP 1 001 079 B1**
(45) Veröffentlichungstag und Bekanntmachung des Hinweises auf die Patenterteilung: **31.03.2004**
(21) Anmeldenummer: 99120436.3
(22) Anmeldetag: 14.10.1999
(51) Int. Cl.: D21F 1/70, B03D 1/14

(54) **Verfahren und Vorrichtung zur Entfernung von Partikeln aus einer wässrigen papierfaserhaltigen Suspension**
Method and device for removing particles from aqueous paper fibre suspension
Méthode et dispositif pour la séparation des particules d'une suspension aqueuse de fibres à papier

(30) Priorität: 13.11.1998 DE 19852549
(43) Veröffentlichungstag der Anmeldung: 17.05.2000
(73) Patentinhaber: Voith Paper Patent GmbH, 89522 Heidenheim (DE)
(72) Erfinder: Britz, Herbert, 88250 Weingarten (DE); Mannes, Wolfgang, 88213 Bavendorf (DE); Dormischian, Feridun, 88250 Weingarten (DE); Selbherr, Anton, 88518 Herbertingen 1 (DE); Holik, Herbert, 88213 Ravensburg (DE)

(56) Entgegenhaltungen:
- EP-A- 0 659 489
- EP-A- 0 798 416
- WO-A-99/15278
- US-A- 4 737 272
- US-A- 4 749 473

## Beschreibung

Die Erfindung betrifft ein Verfahren gemäß dem Oberbegriff des Anspruchs 1 sowie eine Vorrichtung gemäß dem Oberbegriff des Anspruchs 14.

Verfahren und Vorrichtungen der genannten Art werden verwendet, um aus einer papierfaserhaltigen Suspension zumindest einen Teil der darin suspendierten Störstoffteilchen auszuscheiden. Bekanntlich wird bei einer Flotation ein die auszuscheidenden Stoffe enthaltender Schaum oder Schwimmschlamm gebildet. Ein typischer Anwendungsfall eines derartigen Verfahrens ist die Aufbereitung von einer aus bedrucktem Altpapier gewonnenen wässrigen Papier-Faserstoffsuspension, in der die Druckfarbenpartikel bereits von Fasern abgelöst sind, so daß sie sich ausflotieren lassen. Der hier beschriebene Flotationsvorgang nutzt die Unterschiede zwischen Faserstoff und unerwünschten Feststoffteilchen in der Art, daß der Faserstoff aufgrund seiner Hydrophilie in der Faserstoffsuspension verbleibt, während die angesprochenen Feststoffteilchen hydrophob sind und deshalb zusammen mit den Luftblasen in den Schaum gelangen.

Neben den Druckfarbenpartikeln gibt es auch eine Vielzahl weiterer Stoffe, die hydrophob sind, und sich daher durch Flotation von dem Faserstoff trennen lassen. Solche Stoffe sind insbesondere Kleber, feine Kunststoffpartikel und eventuell auch Harze. Wenn durch das Flotationsverfahren Fasern von Verunreinigungen getrennt, also nicht alle Feststoffpartikel aussortiert werden sollen, spricht man von selektiver Flotation. Der ebenfalls benutzte Begriff "Flotationsdeinking" wird in der Regel nicht nur für die Entfernung von Druckfarbenpartikeln (ink = Druckfarbe), sondern auch allgemeiner für die selektive Flotation von Verunreinigungen aus Faserstoffsuspensionen verwendet.

Aus der US 4,749,473 ist ein Flotationsverfahren bekannt, bei dem die Suspension in einem stehenden zylindrischen Flotationsbehälter, der mit senkrechten Trennwänden versehen ist, flotiert wird. Dabei wird sie in nacheinanderfolgenden Ab- und Aufwärtsströmungen von einer zur anderen Seite des Behälters geführt. Die Belüftung erfolgt im Bodenbereich durch mit Düsen versehene horizontale Zylinder, welche vorzugsweise in Rotation versetzt werden. Durch diese Art der Strömungsführung wird zu Beginn eine Gegenströmung von aufwärtstreibenden Luftblasen und abwärtstreibender Suspension erzeugt.

Die DE 28 36 496 C2 zeigt ein Verfahren zum Deinken von Faserstoffsuspensionen. Dabei wird eine in zwei Abteilungen unterteilte Flotationszelle verwendet. Die Faserstoffsuspension wird in der ersten Abteilung zum Aufsteigen und in der zweiten Abteilung zum Absinken gebracht. Die zweite Abteilung ist von sehr geringer Höhe im Vergleich zur ersten Abteilung. Daher ist davon auszugehen, daß die Flotation in relativ kurzer Zeit ablaufen muß. Abhilfe könnte eventuell die ebenfalls vorgeschlagene Rotationsströmung bringen.

Es ist Aufgabe der Erfindung, ein neues Verfahren bzw. eine dafür geeignete kompakte Vorrichtung zu schaffen, mit denen es gelingt, die Störstoffpartikel noch effektiver zu entfernen, und die einen geringen apparativen Aufwand erfordern.

Diese Aufgabe wird durch die in den Kennzeichen der Ansprüche 1 oder 14 genannten Merkmale gelöst.

Mit Hilfe der Erfindung wird das innerhalb des Flotationsbehälters liegende Volumen optimal für die Flotation ausgenutzt. Dabei wird die Suspension im Flotationsbehälter so geführt, daß zu Beginn eine Aufwärtsströmung erfolgt Das bedeutet eine Gleichströmung von Gasblasen und Suspension. Dieses Vorgehen hat den Vorteil, daß die nur schwach an die Gasblasen angelagerten Störstoffe schnell und schonend in den Flotationsschaum geführt werden, also die Gefahr des Abreißens relativ gering ist. Nachdem auf diese Weise ein großer Anteil der Störstoffe bereits im Schaum abgeschieden ist, folgt der Aufwärts- eine Abwärtsströmung. Es kann nun in einer Gegenströmung bei höherer Verweilzeit auch der feinere Anteil mit den Blasen in Kontakt treten. Unter Umständen reicht hierzu die überwiegend aus feinen Blasen bestehende Restluft aus. Die abwärts gerichtete Suspensionsgeschwindigkeit kann dabei durch größere Strömungsquerschnitte herabgesetzt werden.

Durch die zwischen den Trennwänden gebildeten Kanäle kann die mit Gasblasen (in der Regel Luftblasen) vermischte Suspension insgesamt einen relativ langen Weg zurücklegen, bis sie in den Gutstoffauslauf gelangt. Dadurch ist die Wahrscheinlichkeit, daß die in ihr enthaltenen Störstoffe mit den Gasblasen in Kontakt treten und dadurch flotiert werden können, relativ hoch. Auf diesem Strömungsweg läßt sich der Flotationsschaum an mehreren Stellen von der strömenden Suspension abtrennen. Am oberen Überlauf von einem Kanal in den anderen kann mit Vorteil der Steigweg der Gasblasen aus der Suspension in den Flotationsschaum klein gehalten werden.Die Bildung von relativ engen Kanälen (im Gegensatz zum Flotationsbehälter ohne entsprechende Trennwände) bringt zudem den Vorteil, daß die Strömung gut geführt und damit definiert ist. Die für die Durchführung eines Flotationsverfahrens wichtigen Parameter können so optimal eingestellt werden.

Eine weitere Verbesserung ist möglich, wenn im Boden des Flotationsbehälters die Zugabe von weiterer Luft, von belüfteter Suspension oder von belüftetem Wasser vorgenommen wird. Dadurch kann z.B. in jedem der Kanäle eine verbesserte Luftbeladung der Suspension erfolgen. Das ist besonders im Bereich direkt unterhalb einer Aufwärtsströmung von Vorteil. Auch läßt sich die Größe der Luftblasen in den einzelnen Kanälen den Erfordernissen anpassen.

Weitere vorteilhafte Ausführungsformen der Erfindung sind in den abhängigen Ansprüchen angegeben.

Die Erfindung und ihre Vorteile werden erläutert anhand von Figuren. Dabei zeigen:
- Fig. 1: schematisch: Die Durchführung des erfindungsgemäßen Verfahrens mit
- Fig. 2 bis 4: jeweils eine Variante des Verfahrens.

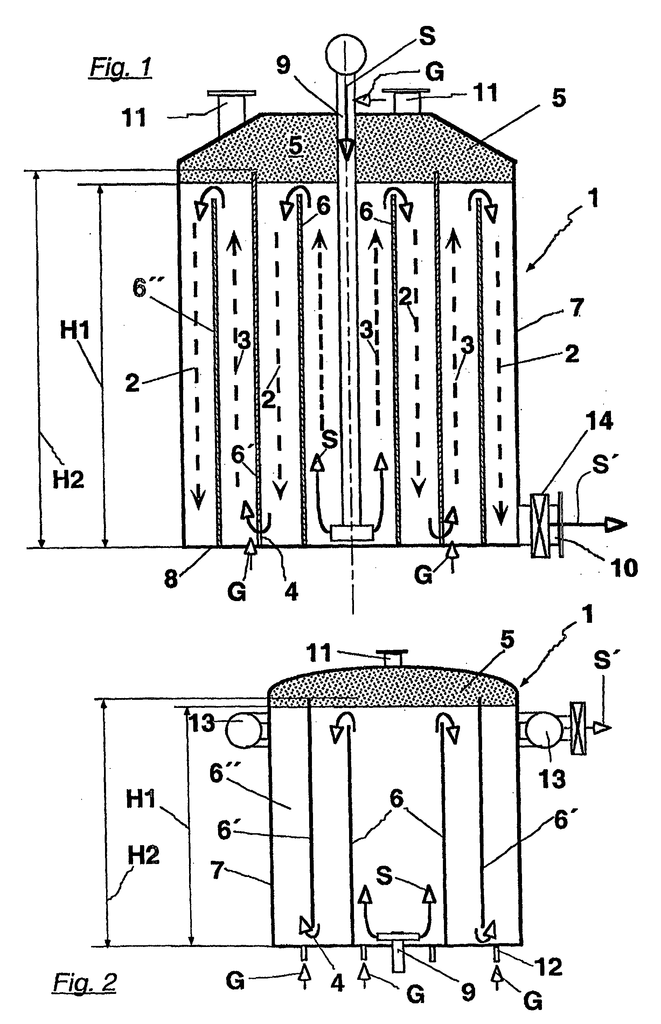

In Fig. 1 ist ganz schematisch eine zylindrische Flotationsvorrichtung dargestellt, mit der das erfindungsgemäße Verfahren ausgeführt werden kann. Demnach wird die Suspension S zusammen mit Gas G durch den Einlauf 9 in den Flotationsbehälter 1 unten eingegeben. Dabei ist nicht gezeigt, auf welche Weise in der Suspension die Gasblasen zur Flotation erzeugt werden. Derartige Verfahren sind hinreichend bekannt. Der Flotationsbehälter 1 hat hier eine zylindrische Seitenwand 7 und ist mit mehreren zu dieser Seitenwand 7 konzentrischen Trennwänden 6, 6', 6'' versehen. Dadurch bilden sich ringförmige Kanäle, welche von der Suspension S auf ihrem Weg von innen nach außen senkrecht durchströmt werden. Das führt zuerst zu einer Aufwärtsströmung 3 der Suspension und dann zu einer Abwärtsströmung 2, dann wieder zu einer Aufwärts- und einer Abwärtsströmung. Der Strömungsweg der Suspension wird wesentlich verlängert.

Der sich bildende Flotationsschaum 5 wird im oberen Teil des Flotationsbehälters 1 gesammelt, wobei die gesamte freie Oberfläche der Suspension genutzt werden kann. Er wird dann über einen oder mehrere Rejektausläufe 11 abgezogen. Flotationsschäume, die aus verschiedenen Kanälen oder Bereichen stammen, können auch getrennt erfaßt werden und so je nach Beladung mit z.B. Störstoffpartikel und Fasern einer speziellen Wiederaufbereitung (Faserrückgewinnung) zugeführt werden. Die Suspension wird nach erfolgter Flotation als gereinigte Flotation S' aus dem Flotationsbehälter 1 unten abgeführt. Die Hauptströmungsrichtung verläuft also hier radial von innen nach außen. Auch die Ableitung der gereinigten Suspension S' im oberen Bereich des Flotationsbehälters ist denkbar. Dann wäre die Trennwand 6'' wegzulassen (siehe Fig. 2).

Besonders geeignet ist das Verfahren zur selektiven Flotation, was bedeutet, daß in der gereinigten Suspension S' ein Großteil der Papierfasem verbleibt. Es ist aber auch denkbar, das Verfahren zur Klärflotation einzusetzen, bei dem möglichst alle Feststoffpartikel in den Flotationsschaum 5 gelangen.

Der durch das Verfahren gebildete Flotationsschaum 5 kann, wie hier dargestellt, den ganzen oberen Bereich des Flotationsbehälters 1 ausfüllen und dann infolge eines gewissen Überdruckes aus dem Behälter entfernt werden. Um die Suspensionsfüllhöhe H1 im Flotationsbehälter 1 zu regeln, kann zur Erhaltung eines Gegendruckes am Gutstoffauslauf 10 ein einstellbares Ventil 14 angebracht sein. Eine andere Möglichkeit besteht darin, daß an den Gutstoffauslauf 10 ein (hier nicht gezeigtes) Überlaufgefäß mit dem entsprechenden Niveau installiert wird. Durch Einstellung der Suspensionsfüllhöhe läßt sich auch die Menge des abgezogenen Flotationsschaumes regulieren. Die Trennwand 6' reicht mit ihrer Höhe H2 Ober die Suspensionsfüllhöhe H1 hinaus, weil dort ein Überfließen der Suspension nicht erfolgen soll.

Damit die Suspension von einem Kanal in den anderen strömen kann, sind im Bodenbereich beim Übergang von der Abwärtsströmung 2 in die Aufwärtsströmung 3 Durchlauföffnungen 4 frei gelassen. Eine Durchlauföffnung 4 kann sich auch über den ganzen Umfang erstrecken, wenn die entsprechende Trennwand 6 irgendwo oberhalb verankert ist. Beim Übergang der Aufwärtsströmung 3 in eine Abwärtsströmung 2 strömt die Suspension am oberen Rand der Trennwand 6 bzw. 6" über, wobei diese oberen Ränder normalerweise unterhalb des Flotationsfüllstandes sind. Dieser Flotationsfüllstand liegt in der Höhe H1 über der Grundfläche 8 des Flotationsbehälters 1. Das Verfahren kann auch eine zusätzliche Begasung der Suspension im Flotationsbehälter 1 vorsehen, wozu hier im Bereich der Grundfläche 8 mehrere Stellen zur Zugabe von dem Gas G gezeigt sind. Mit Vorteil kann die Zugabe des Gases G in einer Aufwärtsströmung 3 erfolgen. Es ist auch möglich, die Suspension S gänzlich ohne Gasblasen in den Flotationsbehälter 1 zuzuführen und dort erst entsprechend zu belüften.

Die Trennwände 6, 6', 6" können so dimensioniert sein, daß der rechtwinkelig zu ihnen liegende Querschnitt in den Kanälen konstant bleibt; es kann aber auch von Vorteil sein, diese Querschnitte in Hauptströmungsrichtung, also hier radial nach außen zu vergrößern, um dort die vertikale Geschwindigkeit der Suspension geringer zu halten.

Das ist besonders bei der letzten Abwärtsströmung 2 vor dem Gutstoffauslauf von Vorteil. Im Bereich der Abwärtsströmungen 2 sollte die vertikal gerichtete Strömungsgeschwindigkeit nicht höher sein als die Steiggeschwindigkeit der Gasblasen.

In der Fig. 2 wird die Suspension S von unten in den Flotationsbehälter 1 eingeleitet. Außerdem ist eine besonders vorteilhafte Ableitung der gereinigten Suspension S' dargestellt, und zwar in Form einer Ringleitung 13, welche eine Mehrzahl von Verbindungen mit dem Flotationsbehälter 1 aufweist. Dadurch kann die Strömung innerhalb des Flotationsbehälters vergleichmäßigt werden. Eine Ringleitung kann auch bei unten liegendem Ausfluß der Suspension S' verwendet werden.

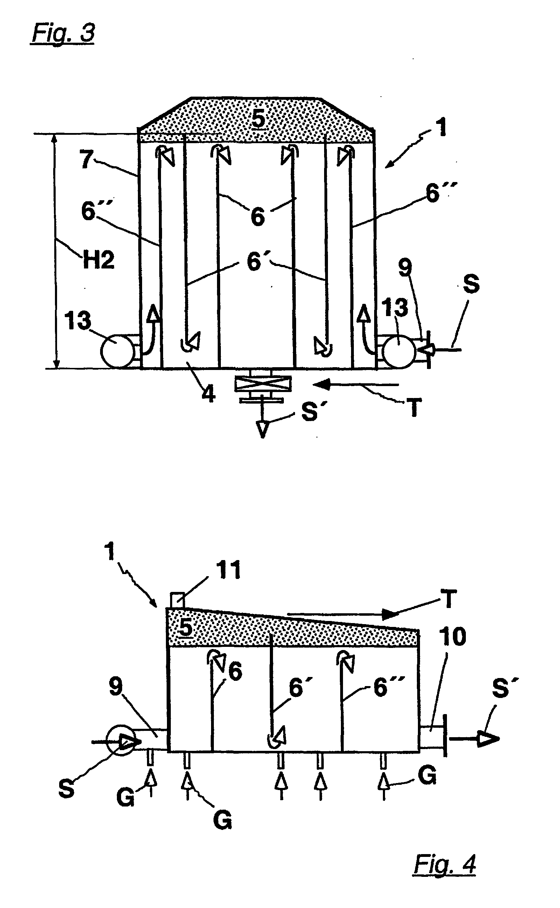

Fig. 3 zeigt eine andere Strömungsführung im Flotationsbehälter 1; in diesem Fall strömt die Suspension S durch die Ringleitung 13 von radial außen zu und wird nach der Flotation als gereinigte Suspension S' aus der inneren Kammer wieder abgeleitet. Die Hauptströmungsrichtung T ist also radial von außen nach innen.

Es sind auch ohne weiteres andere Anordnungen denkbar, z.B. eine Translationsströmung gemäß Fig. 4 durch einen Flotationsbehälter mit rechteckiger Grundfläche. Die Trennwände 6, 6', 6'', 6''' stehen quer zur Hauptströmungsrichtung T der Suspension und senkrecht. Die Grundfläche kann auch rund oder oval sein, was den Vorteil hätte, daß der statische Druck bereits mit geringen Wandstärken des Flotationsbehälters aufgenommen werden kann.

## Patentansprüche

1. Verfahren zur Entfernung von Partikeln aus einer papierfaserhaltigen Suspension (S), bei dem die Partikel durch Ankoppelung von Gasblasen in einem Flotationsbehälter (1) zum Aufsteigen gebracht und mit dem so gebildeten Flotationsschaum (5) aus dem Flotationsbehälter (1) entfernt werden, während die gereinigte Suspension (S') als Gutstoff aus dem Flotationsbehälter (1) abgeleitet wird, wobei die Suspension (S) auf dem Weg durch den Flotationsbehälter (1) in Kanälen zwischen mehreren Trennwänden (6, 6', 6", 6''') so geführt wird, daß Aufwärtsströmungen (3) und mindestens eine Abwärtsströmung (2) erzeugt werden, indem mehrmals die Richtung umkehrt und dann bei den Umlenkungen der Aufwärtsströmung (3) in die Abwärtsströmung (2) eine Trennung von Suspension (S) und Flotationsschaum (5) vorgenommen wird,
**dadurch gekennzeichnet,**
**daß** die Flotation mit einer Aufwärtsströmung im Flotationsbehälter (1) beginnt und daß die Suspension (S) auf dem Weg durch den Flotationsbehälter (1) so geführt wird, daß vor einer Aufwärtsströmung (3), die einer Abwärtsströmung (2) folgt, ein Durchfluss durch eine Trennwand (6') in den nächsten Kanal stattfindet.

2. Verfahren nach Anspruch 1,
**dadurch gekennzeichnet,**
**daß** die Trennwände (6, 6', 6", 6''') vertikal stehen und nebeneinander angeordnet sind und daß sich die Wege der Abwärts- und Aufwärtsströmung über mindestens der Hälfte der Suspensionsfüllhöhe (H1) im Flotationsbehälter (1) erstrecken.

3. Verfahren nach Anspruch 1 oder 2,
**dadurch gekennzeichnet,**
**daß** die gereinigte Suspension (S') aus dem unteren Teil des Flotationsbehälters (1) abgeleitet wird.

4. Verfahren nach Anspruch 1, 2 oder 3,
**dadurch gekennzeichnet,**
**daß** die vertikale Komponente der Strömungsgeschwindigkeit der Suspension (S, S') bei der Aufwärtsströmung (3) zwischen 2 und 12 cm/s und bei der Abwärtsströmung (2) zwischen 1 und 7 cm/s liegt

5. Verfahren nach Anspruch 4,
**dadurch gekennzeichnet,**
**daß** die vertikale Komponente der Strömungsgeschwindigkeit der Suspension (S, S') bei der letzten Abwärtsströmung (2) zwischen 1 und 4 cm/s liegt

6. Verfahren nach einem der voranstehenden Ansprüche,
**dadurch gekennzeichnet,**
**daß** die Suspension (S) zuerst mit Gasblasen vermischt und dann in den Flotationsbehälter (1) zur bereits darin befindlichen Suspension zugegeben wird.

7. Verfahren nach einem der voranstehenden Ansprüche,
**dadurch gekennzeichnet,**
**daß** zumindest ein Teil des zur Bildung der Gasblasen benutzten Gases (G) beim Übergang der Abwärtsströmung (2) in die Aufwärtsströmung (3) zur bereits im Flotationsbehälter (1) befindlichen Suspension zugemischt wird.

8. Verfahren nach einem der voranstehenden Ansprüche,
**dadurch gekennzeichnet,**
**daß** zumindest ein Teil des zur Bildung der Gasblasen benutzten Gases (G) am Ende einer Abwärtsströmung (2) zur bereits im Flotationsbehälter (1) befindlichen Suspension zugemischt wird.

9. Verfahren Anspruch 7 oder 8,
**dadurch gekennzeichnet,**
**daß** das Gas (G) der Suspension (S) so zugemischt wird, daß die gebildeten Gasblasen eine signifikant andere Größe haben als die bereits im Flotationsbehälter (1) befindlichen Gasblasen, vorzugsweise daß sie größer sind.

10. Verfahren nach einem der Ansprüche 7, 8 oder 9,
**dadurch gekennzeichnet,**
**daß** die Gasblasen in der Aufwärtsströmung (3) kleiner eingestellt werden als in der Abwärtsströmung (2).

11. Verfahren nach einem der voranstehenden Ansprüche,
**dadurch gekennzeichnet,**
**daß** die Suspensionsfüllhöhe (H1) mindestens so groß ist wie die maximale horizontale Erstreckung der den Flotationsbehälter (1) unten abschließenden Grundfläche (8).

12. Verfahren nach einem der voranstehenden Ansprüche ,
**dadurch gekennzeichnet,**
**daß** der Flotationsbehälter (1) oval oder rund ist und daß die Suspension (S) in der Mitte zugeführt und als gereinigte Suspension (S') außen abgeführt wird, so daß eine Hauptströmung (T) von radial innen nach radial außen erzeugt wird.

13. Verfahren nach Anspruch 12,
**dadurch gekennzeichnet,**
**daß** die Suspension (S) im Flotationsbehälter (1) mit einer Strömungsgeschwindigkeit in Umfangsrichtung von mindestens 1 cm/s umgetrieben wird.

14. Flotationsvorrichtung zur Durchführung des Verfahrens nach einem der voranstehenden Ansprüche mit mindestens einem Einlauf (9) für die Suspension (S), mindestens einem Gutstoffauslauf (10) für die gereinigte papierfaserhaltige Suspension (S'), mindestens einem Rejektauslauf (11) für den Störstoffpartikel enthaltenden Flotationsschaum (5) und mit einem Flotationsbehälter (1), in dem sich mehrere Trennwände (6, 6', 6") befinden, welche so angeordnet sind, daß zwischen ihnen aufwärts- und abwärtsführende Kanäle entstehen,
wobei diese Kanäle den Einlauf (9) mit dem Gutstoffauslauf (10) hydraulisch verbinden,
**dadurch gekennzeichnet,**
**daß** der Einlauf (9) im unteren Teil des Flotationsbehälters (1) liegt, und
**daß** ein Teil der Trennwände (6, 6', 6'') mit dem Boden (8') des Flotationsbehälters (1) dicht verbunden ist und der andere Teil unter Freilassung von Durchlauföffnungen (4), wobei sich jeweils die abgedichteten und die mit Durchlauföffnungen (4) versehenen Trennwände (6, 6', 6'') in Hauptströmungsrichtung (T) abwechseln.

15. Flotationsvorrichtung nach Anspruch 14,
**dadurch gekennzeichnet,**
**daß** die mit dem Boden (8') des Flotationsbehälters (1) abgedichtet verbundenen Trennwände (6) einen oberen Rand haben, welcher zumindest teilweise unterhalb des vorgesehenen Flüssigkeitsspiegels liegt.

16. Flotationsvorrichtung nach Anspruch 14 oder 15,
**dadurch gekennzeichnet,**
**daß** der Flotationsbehälter (1) eine runde oder ovale Grundfläche hat und eine in sich geschlossene, im wesentlichen senkrechte Seitenwand (7).

17. Flotationsvorrichtung nach Anspruch 16,
**dadurch gekennzeichnet,**
**daß** die Seitenwand (7) und die Trennwände (6, 6', 6'') konzentrisch sind.

18. Flotationsvorrichtung nach einem der Ansprüche 14 bis 17,
**dadurch gekennzeichnet,**
**daß** der Einlauf (9) im zentralen Bereich des Flotationsbehälters (1) liegt und der Gutstoffauslauf (10) im radial äußeren.

19. Flotationsvorrichtung nach einem der Ansprüche 14 bis 17,
**dadurch gekennzeichnet,**
**daß** der Einlauf (9) und der Gutstoffauslauf (10) am Flotationsbehälter (1) gegenüberliegend angebracht sind.

20. Flotationsvorrichtung nach einem der Ansprüche 14 bis 19,
**dadurch gekennzeichnet,**
**daß** die Höhe (H2) der Trennwände (6, 6', 6") über dem Boden (8') mindestens ebenso hoch ist wie die maximal horizontale Erstreckung des Flotationsbehälters (1).

21. Flotationsvorrichtung nach Anspruch 20,
**dadurch gekennzeichnet,**
**daß** die Höhe (H2) der Trennwände (6, 6', 6'') über dem Boden (8') mindestens zwei Mal so hoch ist wie die maximal horizontale Erstreckung des Flotationsbehälters (1).

22. Flotationsvorrichtung nach einem der Ansprüche 14 bis 21,
**dadurch gekennzeichnet,**
**daß** sich im Boden (8') des Flotationsbehälters (1) Anschlüsse (12, 12') befinden, durch die Flotationsluft oder mit Flotationsluft vermischte Flüssigkeit zugegeben werden kann.

23. Flotationsvorrichtung nach Anspruch 22,
**dadurch gekennzeichnet,**
**daß** die Anschlüsse (12) an den Durchlauföffnungen (4) oder unmittelbar stromabwärts danach einmünden.

## Claims

1. A method for the removal of particles from a suspension (S) containing paper fibres, in which the particles are caused to ascend in a flotation vessel (1) by attaching gas bubbles and are removed from the flotation vessel (1) with the flotation froth (5) thus formed, while the cleaned suspension (S') is discharged from the flotation vessel (1) as accepted stock, the suspension (S) on its path through the flotation vessel (1) being guided in channels between a plurality of partitions (6, 6', 6", 6"') such that upward flows (3) and at least one downward flow (2) are produced, by reversing the direction several times and then separation of suspension (S) and flotation froth (5) upon the deflections of the upward flow (3) into the downward flow (2), **characterised in that** the flotation begins with an upward flow in the flotation vessel (1) and that the suspension (S) on its path through the flotation vessel (1) is guided such that before an upward flow (3) which follows a downward flow (2), a throughflow through a partition (6') into the next channel takes place.

2. A method according to Claim 1, **characterised in that** the partitions (6, 6', 6", 6''') are vertical and are arranged next to one another and that the paths of the downward and upward flows extend over at least half of the suspension fill level (H1) in the flotation vessel (1).

3. A method according to Claim 1 or 2, **characterised in that** the cleaned suspension (S') is discharged from the lower part of the flotation vessel (1).

4. A method according to Claim 1, 2 or 3, **characterised in that** the vertical component of the flow rate of the suspension (S, S') upon the upward flow (3) lies between 2 and 12 cm/s and upon the downward flow (2) lies between 1 and 7 cm/s.

5. A method according to Claim 4, **characterised in that** the vertical component of the flow rate of the suspension (S, S') upon the final downward flow (2) lies between 1 and 4 cm/s.

6. A method according to one of the preceding claims, **characterised in that** the suspension (S) is first mixed with gas bubbles and then is added in the flotation vessel (1) to the suspension already located therein.

7. A method according to one of the preceding claims, **characterised in that** at least part of the gas (G) used to form the gas bubbles upon the transition of the downward flow (2) into the upward flow (3) is admixed to the suspension already located in the flotation vessel (1).

8. A method according to one of the preceding claims, **characterised in that** at least part of the gas (G) used to form the gas bubbles at the end of a downward flow (2) is admixed to the suspension already located in the flotation vessel (1).

9. A method according to Claim 7 or 8, **characterised in that** the gas (G) is admixed to the suspension (S) such that the gas bubbles formed are of a significantly different size from the gas bubbles already located in the flotation vessel (1), preferably are larger.

10. A method according to one of Claims 7, 8 or 9, **characterised in that** the gas bubbles in the upward flow (3) are set to be smaller than in the downward flow (2).

11. A method according to one of the preceding claims, **characterised in that** the suspension fill level (H1) is at least as high as the maximum horizontal extent of the base surface (8) which closes off the flotation vessel (1) at the bottom.

12. A method according to one of the preceding claims, **characterised in that** the flotation vessel (1) is oval or round and that the suspension (S) is supplied in the centre and is removed externally as cleaned suspension (S'), so that a main flow (T) from radially to the inside to radially to the outside is produced.

13. A method according to Claim 12, **characterised in that** the suspension (S) in the flotation vessel (1) is circulated at a flow rate in the peripheral direction of at least 1 cm/s.

14. A flotation apparatus for performing the method according to one of the preceding claims, comprising at least one inlet (9) for the suspension (S), at least one accepted-stock outlet (10) for the cleaned suspension (S') containing paper fibres, at least one reject outlet (11) for the flotation froth (5) containing impurity particles and a flotation vessel (1), in which there are a plurality of partitions (6, 6', 6") which are arranged such that channels leading upwards and downwards are produced between them,
these channels hydraulically connecting the inlet (9) to the accepted-stock outlet (10),
**characterised in that**
the inlet (9) is located in the lower part of the flotation vessel (1), and that one portion of the partitions (6, 6', 6") is tightly connected to the base (8') of the flotation vessel (1) and the other portion is connected leaving free passage openings (4), in each case the sealed partitions (6, 6', 6") and the partitions (6, 6', 6") provided with passage openings (4) alternating in the main direction of flow (T).

15. A flotation apparatus according to Claim 14, **characterised in that** the partitions (6) connected in sealed manner to the base (8') of the flotation vessel (1) have an upper edge which lies at least partially beneath the intended liquid level.

16. A flotation apparatus according to Claim 14 or 15, **characterised in that** the flotation vessel (1) has a round or oval base surface and a closed, substantially vertical side wall (7).

17. A flotation apparatus according to Claim 16, **characterised in that** the side wall (7) and the partitions (6, 6', 6") are concentric.

18. A flotation apparatus according to one of Claims 14 to 17, **characterised in that** the inlet (9) is located in the central region of the flotation vessel (1) and the accepted-stock outlet (10) in the radially outer region.

19. A flotation apparatus according to one of Claims 14 to 17, **characterised in that** the inlet (9) and the accepted-stock outlet (10) are attached opposite one another on the flotation vessel (1).

20. A flotation apparatus according to one of Claims 14 to 19, **characterised in that** the height (H2) of the partitions (6, 6', 6") above the base (8') is at least as great as the maximum horizontal extent of the flotation vessel (1).

21. A flotation apparatus according to Claim 20, **characterised in that** the height (H2) of the partitions (6, 6', 6") above the base (8') is at least twice as great as the maximum horizontal extent of the flotation vessel (1).

22. A flotation apparatus according to one of Claims 14 to 21, **characterised in that** connections (12, 12') are located in the base (8') of the flotation vessel (1) by means of which flotation air or liquid mixed with flotation air can be added.

23. A flotation apparatus according to Claim 22, **characterised in that** the connections (12) open on to the passage openings (4) or immediately downstream thereafter.

## Revendications

1. Procédé pour supprimer des particules d'une suspension (S) contenant des fibres de papier, dans lequel on fait monter les particules par accouplement de bulles de gaz dans une cuve de flottation (1) et on les supprime de la cuve de flottation (1) avec l'écume de flottation (5) ainsi formée, tandis que la suspension (S) nettoyée est évacuée de la cuve de flottation (1) sous forme de pâte à papier finie, la suspension (S), sur la trajectoire à travers la cuve de flottation (1), étant guidée dans des canaux entre plusieurs parois de séparation (6, 6', 6'', 6''') de telle sorte, que des flux montants (3) et au moins un flux descendant (2) sont générés en changeant plusieurs fois de direction et en effectuant, lors des inversions du flux montant (3) en flux descendant (2), une séparation de la suspension (S) et de l'écume de flottation (5),
**caractérisé en ce que**
la flottation commence par un flux montant dans le récipient de flottation (1), et **en ce que** la suspension (S), sur la trajectoire à travers le récipient de flottation (1), est guidée de telle sorte qu'avant un flux montant (3) qui suit à un flux descendant (2), un passage s'effectue à travers une paroi de séparation (6') dans le canal suivant.

2. Procédé selon la revendication 1,
**caractérisé en ce que**
les parois de séparation (6, 6', 6'', 6,''') sont verticales et disposées les unes à côté des autres, et **en ce que** les trajectoires des flux descendant et montant s'étendent sur au moins la moitié de la hauteur de remplissage de suspension (H1) dans le récipient de flottation (1).

3. Procédé selon la revendication 1 ou 2.
**caractérisé en ce que**
la suspension nettoyée (S') est évacuée par la partie inférieure du récipient de flottation (1).

4. Procédé selon la revendication 1, 2 ou 3,
**caractérisé en ce que**
la composante verticale de la vitesse de flux de la suspension (S, S') est comprise entre 2 et 12 cm/s pour le flux montant (3) et entre 1 et 7 cm/s pour le flux descendant (2).

5. Procédé selon la revendication 4,
**caractérisé en ce que**
la composante verticale de la vitesse de flux de la suspension (S, S') est comprise entre 1 et 4 cm/s lors du dernier flux descendant (2).

6. Procédé selon l'une quelconque des revendications précédentes,
**caractérisé en ce que**
la suspension (S) est d'abord mélangée avec des bulles de gaz puis ajoutée à la suspension se trouvant déjà dans le récipient de flottation (1).

7. Procédé selon l'une quelconque des revendications précédentes,
**caractérisé en ce que**
au moins une partie du gaz (G) utilisé pour former les bulles de gaz est mélangée avec la suspension se trouvant déjà dans le récipient de flottation (1) lors du passage du flux descendant (2) vers le flux montant (3).

8. Procédé selon l'une quelconque des revendications précédentes,
**caractérisé en ce que**
au moins une partie du gaz (G) utilisé pour former les bulles de gaz est mélangée avec la suspension se trouvant déjà dans le récipient de flottation (1) à la fin d'un flux descendant (2).

9. Procédé selon la revendication 7 ou 8,
**caractérisé en ce que**
le gaz (G) est mélangé avec la suspension (S) de telle sorte que les bulles de gaz formées présentent une taille significativement différente des bulles de gaz se trouvant déjà dans le récipient de flottation (1), de préférence **en ce qu'**elles sont plus grandes.

10. Procédé selon l'une quelconque des revendications 7, 8 ou 9,
**caractérisé en ce que**
les bulles de gaz sont réglées plus petites dans le flux montant (3) que dans le flux descendant (2).

11. Procédé selon l'une quelconque des revendications précédentes,
**caractérisé en ce que**
la hauteur de remplissage de suspension (H1) est au moins égale à l'étendue horizontale maximale de la surface de base (8) fermant le récipient de flottation (1) en bas.

12. Procédé selon l'une quelconque des revendications précédentes,
**caractérisé en ce que**
le récipient de flottation (1) est ovale ou rond, et **en ce que** la suspension (S) est introduite au centre et évacuée à l'extérieur sous forme de suspension nettoyée (S') de manière à générer un flux principal (T) de l'intérieur radialement vers l'extérieur radialement,

13. Procédé selon la revendication 12,
**caractérisé en ce que**
la suspension (S) dans la cuve de flottation (1) est en mouvement avec une vitesse de flux dans le sens circonférentiel d'au moins 1 cm/s.

14. Dispositif de flottation pour la mise en oeuvre du procédé selon l'une quelconque des revendications précédentes comprenant au moins une entrée (9) pour la suspension (S), au moins une sortie (10) de pâte à papier finie pour la suspension nettoyée (S') contenant des fibres de papier, au moins une sortie de rejet (11) pour l'écume de flottation (5) contenant des particules polluantes, et un récipient de flottation (1), dans lequel se trouvent plusieurs parois de séparation (6, 6', 6''), qui sont disposées de sorte que des canaux montants et descendants soient formés entre elles, ces canaux reliant hydrauliquement l'entrée (9) à la sortie (10) de pâte à papier finie,
**caractérisé en ce que**
l'entrée (9) se situe dans la partie inférieure de la cuve de flottation (1), et **en ce qu'**une partie des parois de séparation (6, 6', 6'') est reliée de manière étanche au fond (8') de la cuve de flottation (1) et l'autre partie en réservant des ouvertures de passage (4), les parois de séparation (6, 6', 6'') étanches et celles pourvues d'ouvertures de passage (4) étant respectivement disposées en alternance dans le sens du flux principal (T).

15. Dispositif de flottation selon la revendication 14,
**caractérisé en ce que**
les parois de séparation (6) reliées de manière étanche au fond (8') de la cuve de flottation (1) présentent un bord supérieur, qui se situe du moins partiellement en dessous du niveau de liquide prévu.

16. Dispositif de flottation selon la revendication 14 ou 15,
**caractérisé en ce que**
la cuve de flottation (1) présente une surface de base ronde ou ovale ainsi qu'une paroi latérale fermée (7) sensiblement verticale.

17. Dispositif de flottation selon la revendication 16,
**caractérisé en ce que**
la paroi latérale (7) et les parois de séparation (6, 6', 6'') sont concentriques.

18. Dispositif de flottation selon l'une quelconque des revendications 14 à 17,
**caractérisé en ce que**
l'entrée (9) se situe dans la zone centrale du récipient de flottation (1) et la sortie (10) de pâte à papier finie dans la zone radiale extérieure.

19. Dispositif de flottation selon l'une quelconque des revendications 14 à 17,
**caractérisé en ce que**
l'entrée (9) et la sortie (10) de pâte à papier finie sont disposées sur la cuve de flottation (1) l'une au regard de l'autre.

20. Dispositif de flottation selon l'une quelconque des revendications 14 à 19,
**caractérisé en ce que**
la hauteur (H2) des parois de séparation (6, 6', 6'') au-dessus du fond (8') présente au moins la même valeur que l'étendue horizontale maximale du récipient de flottation (1).

21. Dispositif de flottation selon la revendication 20,
**caractérisé en ce que**
la hauteur (H2) des parois de séparation (6, 6', 6") au-dessus du fond (8') est au moins deux fois plus grande que l'étendue horizontale maximale du récipient de flottation (1).

22. Dispositif de flottation selon l'une quelconque des revendications 14 à 21,
**caractérisé en ce que**
dans le fond (8') du récipient de flottation (1) des raccordements (12, 12') sont prévus, permettant d'ajouter l'air de flottation ou un liquide mélangé avec l'air de flottation.

23. Dispositif de flottation selon la revendication 22,
**caractérisé en ce que**
les raccordements (12) débouchent au niveau des ouvertures de passage (4) ou immédiatement en aval de celles-ci.
